# EUROPEAN PATENT SPECIFICATION

(11) **EP 3 955 078 B1**
(45) Date of publication and mention of the grant of the patent: **01.01.2025**
(21) Application number: 19924166.2
(22) Date of filing: 20.09.2019
(51) Int. Cl.: G05D 1/00, A01D 75/20, A01B 69/04

(54) **TRAVEL PATH PLANNING SYSTEM FOR MULTIPLE AUTOMATIC HARVESTERS AND METHOD THEREFOR**
FAHRWEGPLANUNGSSYSTEM FÜR MEHRERE AUTOMATISCHE ERNTEMASCHINEN UND VERFAHREN DAFÜR
SYSTÈME DE PLANIFICATION DE TRAJET DE DÉPLACEMENT POUR PLUSIEURS MOISSONNEUSES AUTOMATIQUES ET PROCÉDÉ ASSOCIÉ

(30) Priority: 09.04.2019 CN 201910280738
(43) Date of publication of application: 16.02.2022
(73) Proprietor: FJ Dynamics Technology Co., Ltd, Xiangyang, Hubei 441100 (CN)
(72) Inventor: WU, Di, Xiangyang, Hubei 441100 (CN); YAO, Yuan, Xiangyang, Hubei 441100 (CN); WANG, Qingquan, Xiangyang, Hubei 441100 (CN); WANG, Bo, Xiangyang, Hubei 441100 (CN); ZHANG, Xiao, Xiangyang, Hubei 441100 (CN); CEHN, Rui, Xiangyang, Hubei 441100 (CN); FAN, Shun, Xiangyang, Hubei 441100 (CN)
(74) Representative: Zaboliene, Reda
(86) International application number: PCT/CN2019/106985
(87) International publication number: WO 2020/206945

(56) References cited:
- EP-A1- 3 018 987
- EP-B1- 3 018 987
- WO-A1-2016/116888
- WO-A1-2018/116770
- CN-A- 103 149 914
- CN-A- 103 345 246
- CN-A- 106 020 233
- CN-A- 109 099 925
- JP-A- 2019 028 688
- US-A1- 2012 029 732

## Description

### TECHNICAL FIELD

The present disclosure relates to automatic harvesters, and particularly to a system and a method for planning driving paths for multiple automatic harvesters, and a method for planning an optimal driving paths for simultaneous operation of multiple automatic harvesters.

### BACKGROUND

Nowadays, agricultural machinery industry has great momentum of development and current agriculture can be said to have got rid of the backward manner of farming by manpower, almost all links from sowing, plant protection to harvesting are completed by automatic harvester equipment, it can be said that modem agriculture has entered an era of mechanization. Further, in recent years, agricultural machinery has continued to develop and progress, in order to improve economic benefits of agriculture and promote a development of economic society, various agricultural machineries have sprung up like bamboo shoots after a rain, entered thousands of households in the countryside and brought countless benefits to farmers. In other words, modem agricultural machinery has played a certain role in improving labor productivity and promoting economic development. The mechanization of agriculture has improved efficiency of agricultural production, brought great convenience to the farmers, and played an important role in the rapid development of agriculture,

In particular, the automatic harvesters began to develop in the direction of unmanned aerial vehicles or autonomous driving. For unmanned aerial vehicles or autonomous driving, driving path planning of the automatic harvester is one of the critical areas of focus. At the same time, with a development of domestic urbanization and merger of fertile land, large-scale production is not only a trend of foreign agriculture, but also a trend of domestic agriculture. In order to improve harvesting efficiency, in large farmland, multiple harvesters are usually utilized to operate simultaneously. However, when the harvesters are automatic harvesters, how do multiple automatic harvesters operate together, and how to plan a harvesting path of each automatic harvester is worth studying. D1: EP3018987A1 discloses a method comprising identifying field boundaries from aerial imagery; detecting entry upon a first field by an agricultural machine without operator intervention, the first field within the identified field boundaries; and providing a first path to be traversed in the first field at least in part by the agricultural machine.

### SUMMARY

The present disclosure provides a system and a method for planning driving paths for multiple automatic harvesters, the driving paths of multiple automatic harvesters are planned, so that the automatic harvesters operate in cooperation with each other, to achieve a more efficient harvesting effect.

The present disclosure provides a system and a method for planning driving paths for multiple automatic harvesters, manual, automatic, and semi-automatic settings can be used to enable the driving path planning system to separately plan the most suitable driving path for each automatic harvester, so as to ensure better harvesting efficiency and better operation distribution.

The present disclosure provides a system and a method for planning driving paths for multiple automatic harvesters, obstacle information is acquired in advance to enable the automatic harvester to automatically avoid the obstacle during path planning or driving operation.

The present disclosure provides a system and a method for planning driving paths for multiple automatic harvesters, when each of the automatic harvesters are harvesting in the respective harvesting areas, while acquiring obstacle information, the path planning can be modified to avoid obstacles, or the automatic harvester can be stopped directly. In particular, when the automatic harvester in the area replans the path, the automatic harvester in other areas maintains the originally set path when it does not affect the driving path of the automatic harvester in other areas. In contrast, for example, when the automatic harvester in the area replans the path, when the driving path of the automatic harvester in other areas is affected, the driving path of the automatic harvester in other areas will be modified simultaneously.

The present disclosure provides a system and a method for planning driving paths for multiple automatic harvesters, if there is a sudden obstacle, like a small animal or a person, the driving path planning system will stop the automatic harvester to ensure safety.

The present disclosure provides a system and a method for planning driving paths for multiple automatic harvesters, each time driving obstacle information is generated, the driving obstacle information sequentially transmitted to a path planning module for analysis to confirm whether a driving path needs to be replanned.

The present disclosure provides a system and a method for planning driving paths for multiple automatic harvesters, when a probe touches an obstacle, the obstacle analysis device determines whether the automatic harvester stops operating.

The present disclosure provides a system and a method for planning driving paths for multiple automatic harvesters, an infrared detector is used to detect whether an obstacle suddenly breaks into the dangerous area in front of the automatic harvester.

The present disclosure provides a system and a method for planning driving paths for multiple automatic harvesters, there is no need for precise parts and complicated structures, and the manufacturing process is simple and the cost is low.

To satisfy the above purposes and other purposes and advantages of the present disclosure, the present disclosure provides a method for planning driving paths for multiple automatic harvesters, which includes the following steps:
(a) a detection device detecting and forming basic farmland information; and
(b) dividing a harvesting area and forming a driving path for each of the multiple automatic harvester after the basic farmland information is received and quantity determining information is determined.

According to the method of the present disclosure, transmitting the driving path of each of the multiple automatic harvesters to a control device of each of the multiple automatic harvesters.

According to the method of the present disclosure, the basic farmland information is a group formed by a size, an area, a shape, coordinates, and a crop category of a farmland.

According to the method of the present disclosure, a detection device detecting and forming basic farmland information includes acquiring the basic farmland information by an automatic detection module through a fixed-point detection or a movement detection.

According to the method of the present disclosure, the automatic detection module is a module formed by an infrared sensor, a laser sensor, an ultrasonic sensor, an image sensor, or a GPS satellite positioning module.

According to the method of the present disclosure, dividing a harvesting area and forming a driving path for each of the multiple automatic harvesters include detecting whether there is at least one obstacle; and generating previous obstacle information.

According to the method of the present disclosure, the driving path of each automatic harvester has an initial driving point, each initial driving point is the same or different.

According to the method of the present disclosure, dividing a harvesting area and forming a driving path for each of the multiple automatic harvesters include determining a quantity of the multiple automatic harvesters.

According to the method of the present disclosure, the driving paths of the multiple automatic harvesters are not to be affected by each other.

According to the method of the present disclosure, dividing a harvesting area and forming a driving path for each of the multiple automatic harvesters include determining a driving mode of each automatic harvester and generating driving information.

According to the method of the present disclosure, generating driving obstacle information in response that at least one obstacle is detected while the automatic harvesters are driving.

To satisfy the above purposes and other purposes and advantages of the present disclosure, the present disclosure further provides a system for planning driving paths for multiple automatic harvesters, which includes:
a detection device acquiring basic farmland information; and
a path planning module comprising a quantity determining module and a control module; wherein the quantity determining module is connected with the control module and transmits quantity determining information to the control module, wherein the control module divides a harvesting area and a driving path of each of the multiple automatic harvester according to the basic farmland information and the quantity determining information.

According to one embodiment of the present disclosure, the basic farmland information is a group formed by a size, an area, a shape, coordinates, and a crop category of a farmland.

According to one embodiment of the present disclosure, the detection device includes an automatic detection module connected with the control module, wherein the automatic detection module acquires the basic farmland information through a fixed-point detection or a movement detection, and transmits the basic farmland information to the control module.

According to one embodiment of the present disclosure, the automatic detection module is arranged on the automatic harvesters, an unmanned aerial vehicle, or a wireless detector, to perform movable detection.

According to one embodiment of the present disclosure, the automatic detection module is a module formed by an infrared sensor, a laser sensor, an ultrasonic sensor, an image sensor, or a GPS satellite positioning module.

According to one embodiment of the present disclosure, at least one manual determining module connected with the control module and inputting the basic farmland information into the control module.

According to one embodiment of the present disclosure, the detection device includes at least one obstacle pre-detecting device connected with the control module and acquiring previous obstacle information through a fixed-point detection or a movement detection, and transmitting the previous obstacle information to the control module.

According to one embodiment of the present disclosure, the detection device includes at least one driving obstacle detector connected with the control module, arranged on the automatic harvester, acquiring driving obstacle information in response that the at least one obstacle is detected while the automatic harvester is driving, and transmitting the driving obstacle information to the control module.

According to one embodiment of the present disclosure, the at least one driving obstacle detector includes a driving camera sensor, which includes a plurality of cameras surrounding the automatic harvester for acquiring images around the automatic harvester.

According to one embodiment of the present disclosure, the at least one driving obstacle detector includes at least one probe, which is arranged in front of the automatic harvester and detects whether there is at least one obstacle in front of the automatic harvester.

According to one embodiment of the present disclosure, the at least one driving obstacle detector includes at least one infrared detector, which is arranged in front of the automatic harvester for sensing people or animals who suddenly enter the front of the automatic harvester.

According to one embodiment of the present disclosure, the system is arranged on at least one of the multiple automatic harvesters, a remote control, a smart phone, a radio remote control, or a smart tablet host device.

These and other objectives, features, and advantages of the present disclosure are fully embodied by the following detailed description, drawings, and claims.

### BRIEF DESCRIPTION OF THE DRAWINGS

FIG. 1 is a logic schematic view of a preferred embodiment of a system for planning driving paths for multiple automatic harvesters according to the present disclosure.
FIG. 2 is a logic schematic view of a preferred embodiment of a detection device according to the present disclosure.
FIG. 3 is a schematic view of a preferred embodiment of an implantation of planned path according to the present disclosure, three driving paths are taken as the driving paths of three automatic harvesters.
FIG. 4 is a schematic view of a preferred embodiment of a driving mode in multiple circles pattern of the system according to the present disclosure.
FIG. 5 is a schematic view of a preferred embodiment of a driving mode in zigzag pattern of the system according to the present disclosure.
FIG. 6 is a logic schematic view of a preferred embodiment of an automatic harvester according to the present disclosure.

### DETAILED DESCRIPTION

The following description is used to disclose the present disclosure so that one skilled in the art can implement the present disclosure. The preferred embodiments in the following description are only examples, and one skilled in the art can think of other obvious variations. The basic principles of the present disclosure defined in the following description can be applied to other embodiments, modified embodiments, improvement embodiments, equivalent embodiments, and other technical solutions that do not deviate from the spirit and scope of the present disclosure.

One of ordinary skill in the art should understand that, according to the present disclosure, the orientation or position relationship indicated by the terms "longitudinal", "lateral", "upper", "lower", "front", "rear", "left", "right", "vertical", "horizontal", "top", "bottom", "inner", "outer", etc., is the orientation or position relationship shown in the drawings, which is convenient for describing the present disclosure and simplifying the description, rather than indicating or implying that the referred device or component must have a specific orientation, be constructed and operated in a specific orientation, the above terms should not be understood as limiting the present disclosure.

It can be understood that, the term "a" should be understood as "at least one" or "one or more", that is, in one embodiment, the number of a component may be one, and in another embodiment, the number of the component may also be multiple, the term "one" cannot be understood as a restriction on the number.

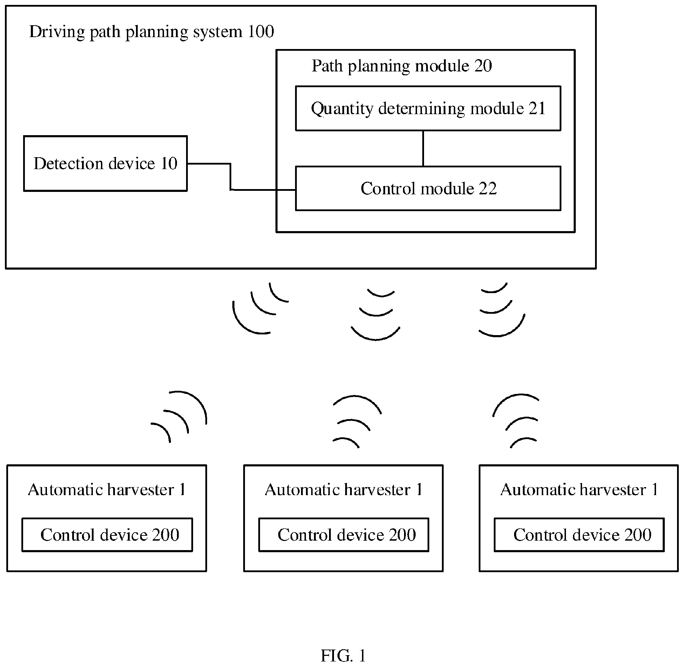

Referring to FIGS. 1-6, a system and a method for planning driving paths for multiple automatic harvesters are illustrated according to a first preferred embodiment of the present disclosure, which enables multiple automatic harvesters 1 to operate at the same time. A driving path planning system 100 plans the driving path of each of the automatic harvesters 1, and the planning of the driving path takes into account conditions of various farms or fields, and problem of operation assignment of multiple automatic harvesters 1, so as to achieve better harvesting efficiency, and avoid mutual influence of the automatic harvesters 1 while operating, such as collision with each other or leaving unharvested areas. Further, the driving path planning system 100 analyzes and plans according to a size, a shape, and features of farmland or fields, and the multiple automatic harvesters 1, so that each of the automatic harvesters 1 has an optimal driving path. Further, the driving path planning system 100 is adapted to the multiple automatic harvesters 1 to plan driving paths of the multiple automatic harvesters 1 in advance. In particular, the driving path planning system 100 is not only adapted to the harvesters, but also adapted to various agricultural machines such as rice transplanters, planting machines, transplanters, tillers, soil preparation machines, etc., which are not a limitation of the present disclosure. In addition, the driving path planning system 100 can be arranged in each of the automatic harvesters, a remote control, a smart phone, a radio remote control, or a smart tablet host device.

In the preferred embodiment of the present disclosure, the driving path planning system 100 includes a detection device 10 and a path planning module 20. The detection device 10 is connected with the path planning module 20. It is worth mentioning that, the above-mentioned connection mode can be a wired connection or an wireless connection, which is not a limitation of the present disclosure. Further, the detection device 10 is used to acquire basic farmland information, such as an area, a shape, and a crop category of the farmland or field. The area or the shape is a field range to be harvested by the multiple automatic harvesters 1. The path planning module 20 includes a quantity determining module 21 and a control module 22. The quantity determining module 21 is connected with the control module 22. The quantity determining module 21 is used to determine the quantity of the automatic harvesters 1 and transmit quantity determining information to the control module 22. The detection device 10 is connected with the control module 22, and is used to transmit the basic farmland information to the control module 22. Further, the control module 22 divides a harvesting area of each automatic harvester 1 according to the quantity of the automatic harvesters 1 and the basic farmland information, plans the driving path of each automatic harvester 1, and transmits the driving path to a control device 200 of each automatic harvester 1.

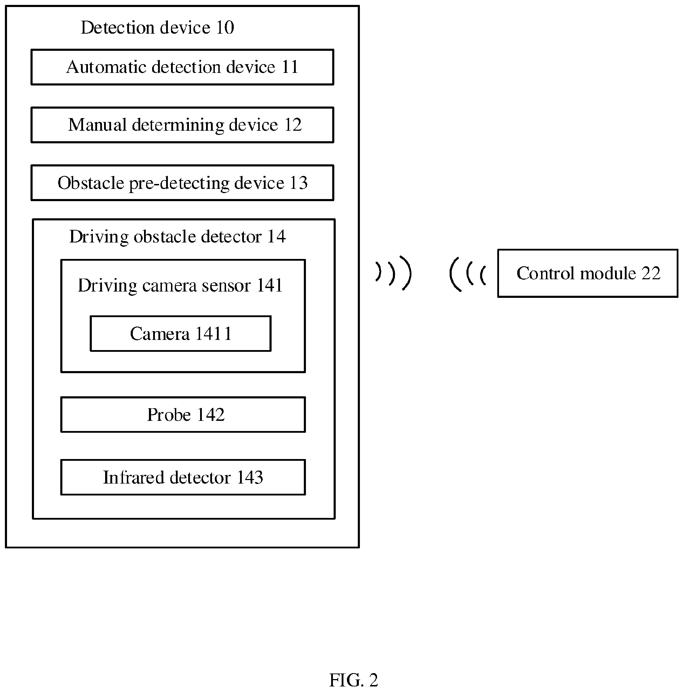

Referring to FIG. 2, in the preferred embodiment of the present disclosure, the detection device 10 includes at least one automatic detection module 11 and a manual determining module 12, the automatic detection module 11 and the manual determining module 12 are respectively connected with the control module 22 of the planning module 20. The automatic detection module 11 can be implemented to perform a fixed-point detection or a movement detection. The fixed-point detection is performed by having a number of automatic detection modules 11 respectively arranged on an corner edge of the farmland or the field, and the basic farmland information is acquired through mutual sensing of the number of automatic detection modules 11, and includes a range, a shape, coordinates, a crop category, etc. of the farmland, land, or field. The movement detection is performed by having the automatic detection module 11 arranged on an automatic harvester, an unmanned aerial vehicle, or a wireless detector, so that the automatic harvester, the unmanned aerial vehicle, or the operator can move to acquire the basic farmland information. It is worth mentioning that, the automatic detection module 11 can be implemented as an infrared sensor, a laser sensor, an ultrasonic sensor, an image sensor, or a GPS satellite positioning module, etc., which is not a limitation of the present disclosure. In addition, the manual determining module 12 pre-acquires the basic farmland information such as a range, a shape, coordinates, a crop category, etc. of the farmland, land, or field, and manually inputs the basic farmland information into the control module 22 of the path planning module 20 through the manual determining module 12. It is worth mentioning that, the control module 22 of the path planning module 20 analyzes and plans the driving path of multiple automatic harvesters 1 (i.e., the driving path of each automatic harvester) according to the basic farmland information acquired by the automatic detection module 11 or the manual determining module 12 and the quantity determining information determined by the quantity determining module.

In the preferred embodiment of the present disclosure, the detection device 10 further includes an obstacle pre-detecting device 13. The obstacle pre-detecting device 13 detects whether there is at least one obstacle, generates a previous obstacle information if there is at least one obstacle, and transmits the previous obstacle information to the control module 22 of the path planning module 20. It is worth mentioning that, the obstacle pre-detecting device 13 can be set to synchronously detect the at least one obstacle together with the automatic detection module 11. In other words, when the automatic detection module 11 acquires the range and shape of the land or field, the obstacle pre-detecting device 13 can synchronously acquire the previous obstacle information, so that when the path planning module 20 plans the driving path, problem of obstacle is synchronously considered and the at least one obstacle may be avoided. In other words, the automatic detection module 11 may also be equal to the obstacle pre-detecting device 13 and simultaneously acquire the basic farmland information and the previous obstacle information. It is worth mentioning that, the control module 22 of the path planning module 20 analyzes the basic farmland information, the previous obstacle information, and the quantity determining information and plans the driving path of each of the automatic harvesters 1. In addition, the obstacle pre-detecting device 13 can be used to distinguish differences between crops and obstacles. The previous obstacle information may include size information, image information, coordinate information, etc. of the at least one obstacle, which is not a limitation of the present disclosure. It is worth mentioning that, the obstacle pre-detecting device 13 may adopt the fixed-point detection or the movement detection which is the same as the detection method adopted by the automatic detection module 11, and the obstacle pre-detecting device 13 and the automatic detection module 11 may synchronously perform the detection method. In addition, the obstacle pre-detecting device 13 can be implemented as an infrared sensor, a laser sensor, an ultrasonic sensor, an image sensor, or a GPS satellite positioning module, etc., which is not a limitation of the present disclosure.

In the preferred embodiment of the present disclosure, the detection device 10 further includes at least one driving obstacle detector 14, which detects whether there is at least one obstacle when each automatic harvester 1 is driven, further acquires driving obstacle information when the at least one obstacle is detected, and transmits the driving obstacle information to the control module 22 of the path planning module 20, when the control module 22 of the path planning module 20 receives the driving obstacle information, the control module 22 determines whether the automatic harvesters 1 in the harvesting area are required to replan the driving path according to the driving obstacle information. Further, after the driving obstacle detector 14 of the automatic harvester 1 in the harvesting area acquires the driving obstacle information that affects a harvesting path, the driving obstacle information is transmitted to the control module 22, and the control module 22 replans the driving path of the automatic harvester 1 in the harvesting area. The new driving path of the automatic harvester 1 in the harvesting area will not affect the driving path of other automatic harvesters 1. It is worth mentioning that, the driving obstacle detector 14 is arranged on the automatic harvester 1, and is optimally arranged in front of the automatic harvester 1. The encountered obstacle can be directly detected by the driving obstacle detector 14 while the automatic harvester 1 is being driven forward. In particular, when the driving obstacle detector 14 detects the obstacle, the automatic harvester 1 determines whether to replan the driving path according to the existing basis.

In the preferred embodiment of the present disclosure, the driving obstacle detector 14 may recognize the crop and the at least one obstacle, acquire the driving obstacle information, such as the size, and transmit the size information of the at least one obstacle to the control module 22 of the path planning module 20. The control module 22 of the path planning module 20 determines whether the at least one obstacle affects the driving path, if not, the automatic harvester 1 directly follows the initial planned driving path, if the at least one obstacle is determined to affect the driving path, the obstacle information is transmitted to the path planning module 20 for replanning the driving path. In particular, the driving obstacle detector 14 may acquire image features for distinguishing the difference between the crops and the at least one obstacle. It is worth mentioning that, the driving obstacle detector 14 is arranged on the automatic harvester 1 and conveniently acquires at least one forward signal, such as the crops and the at least one obstacle, while the automatic harvester 1 is being driven. The driving obstacle detector 14 includes a driving camera sensor 141, which acquires images around the automatic harvester 1 and forms a video signal. In particular, the driving camera sensor 141 includes a number of cameras 1411 surrounding the automatic harvester 1 for acquiring the images around the automatic harvester 1 and forming the video signal. The driving obstacle detector 14 further includes at least one probe 142, which is arranged in front of the automatic harvester 1 and detects whether there is at least one obstacle in front of the automatic harvester 1, such as trees, walls, large rocks, concavities, puddles, rivers, etc. The at least one probe 142 further detects the sizes or the features of various obstacles at the same time, and transmits the detection information to the control module 22 of the path planning module 20, so that the control module 22 of the path planning module 20 determines whether the automatic harvester 1 stops operating. In addition, the driving obstacle detector 14 further includes at least one infrared detector 143, which is arranged in front of the automatic harvester 1 for sensing people or animals who suddenly enter the front of the automatic harvester 1. It is worth mentioning that, after the driving obstacle detector 14 acquires the driving obstacle information, the control module 22 replans the driving path for the automatic harvesting 1 in the harvesting area that has detected the at least one obstacle, the driving paths of the other automatic harvestings 1 in the harvesting areas are not affected. In particular, the replanned driving path prevents the automatic harvester 1 from colliding with each other.

In the preferred embodiment of the present disclosure, the path planning module 20 further includes a path determining module 23, which is connected with the control module 22. The path determining module 23 can determine a driving mode of each automatic harvester 1 respectively, or determine the driving mode of the multiple automatic harvesters 1 to a same driving mode. The driving mode includes driving modes in a multiple circles pattern, a zigzag pattern, a shortest path, an optimal path, loop inward from periphery etc. A user or an operator of the automatic harvester 1 can determine the driving mode of each of the automatic harvesters 1 according to the shape of the field or farmland. As reference sets, the multiple circles pattern can be adopted if the field or farmland is square, the zigzag pattern can be used if the field or farmland is rectangular, the shortest path can be adopted for reducing harvesting time, the optimal path can be adopted if considering landform, harvesting efficiency, and program setting. The various determining methods mentioned above are suggested methods and are not limitations of the present disclosure.

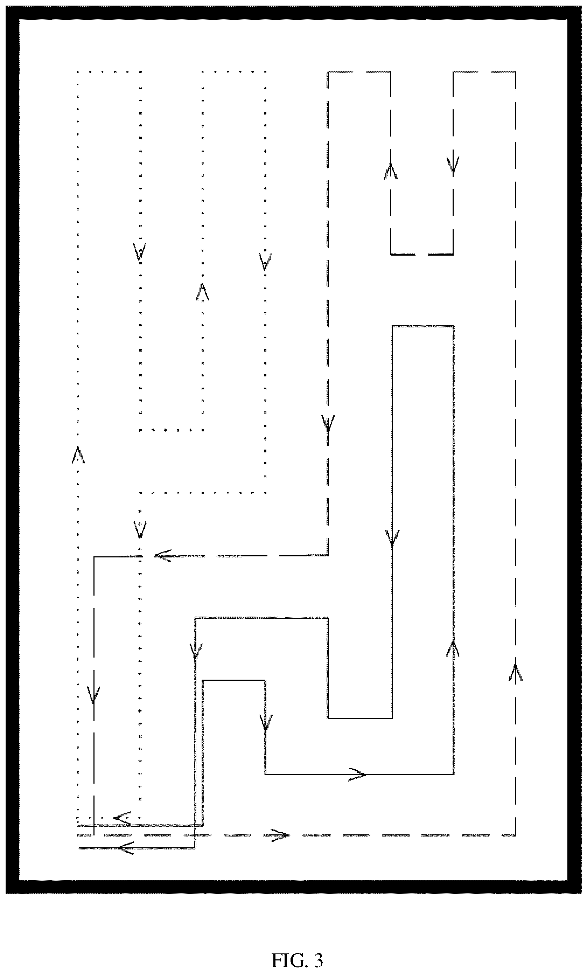

In particular, as illustrated in FIG. 3, the present disclosure provides an implementation of a planned path, which is applicable to three automatic harvesters. In FIG. 3, the outer thick line represents edges of the field or farmland, the three line types in the figure represent three driving paths, which are adopted as the driving paths of the three automatic harvesters 1, and the arrow on the line indicates the driving direction. In this embodiment, the initial driving points are determined to be the same, and the three automatic harvesters 1 return to the initial travel points after harvesting. The driving path planning in this embodiment can be used as a reference, and it is not the only way of implementation, which is not a limitation of the present disclosure.

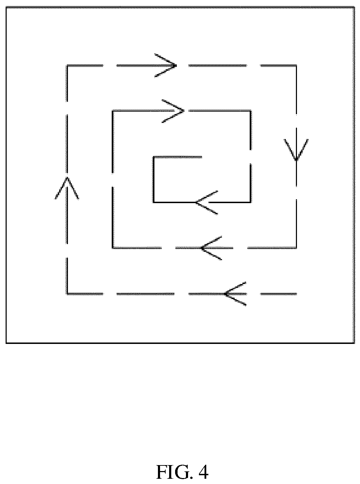

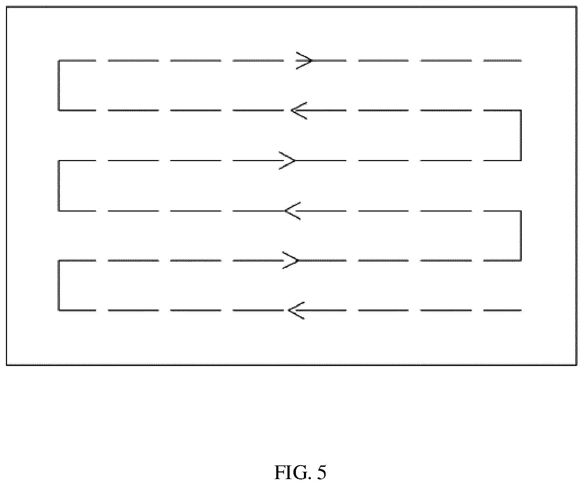

In addition, referring to FIG. 4, a schematic diagram of the driving path in the multiple circles pattern is illustrated, the automatic harvester 1 drives as indicated by the dashed line and the arrow, the dashed line represents the driving path of the automatic harvester, and the arrow represents the driving direction of the automatic harvester. Referring to FIG. 5, a schematic diagram of the driving path in the zigzag pattern is illustrated, the automatic harvester 1 drives as indicated by the dashed line and the arrow. Understandably, the zigzag pattern indicates that the automatic harvesters 1 drives back and forth in rows. Therefore, if the field or farmland has any shape which is not rectangular, the driving mode in the zigzag pattern can also be selected. That is, when the automatic harvester 1 drives to a boundary of one row, the automatic harvester 1 turns and drives to another row, and when driving to the boundary, the automatic harvester 1 turns and drives again in the same manner. In addition, the driving mode of the shortest path or the optimal path is a smart set, if the user or operator of the automatic harvester selects such mode, the path planning module 20 plans the shortest path or the optimal path according to all option content. It can be understood that, the shortest path is the least path that the automatic harvester 1 drives in the entire field, and the optimal path is planned after considering the overall situation. In addition, not all fields or farmlands are completely rectangular or square, but usually have many irregular shapes. In this case, besides selecting the driving mode in the zigzag pattern, the shortest path, or the optimal path, the driving mode of loop inward from periphery can also be selected. The driving mode of loop inward from periphery is to drive inward in circles directly according to the boundary shape of the field. In other words, the driving mode of loop inward from periphery is similar to driving mode in the multiple circles pattern, and the difference lies in the shape of the farmland.

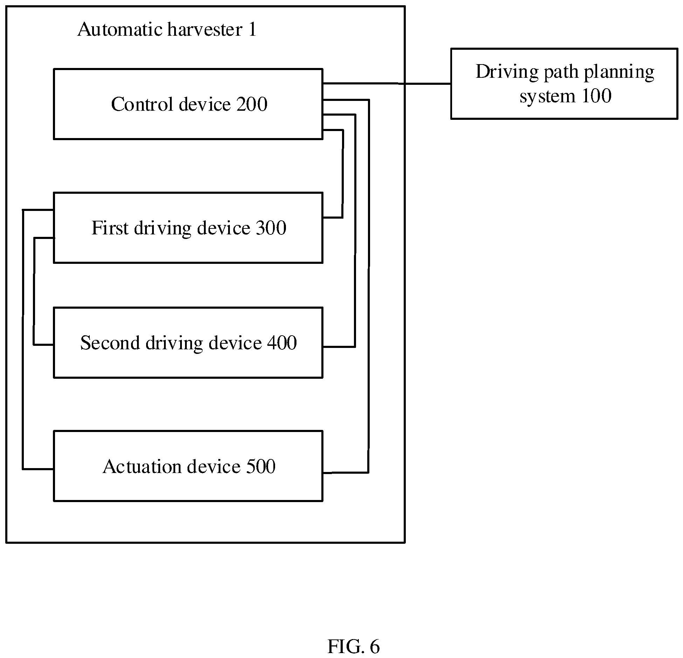

It is worth mentioning that, as illustrated in FIG. 6, each of the automatic harvesters 1 includes a control device 200, a first driving device 300, a second driving device 400, and an actuation device 500. The driving path planning system 100 is a path planning system for multiple automatic harvesters 1, in which each component can be arranged on the automatic harvester 1 or independently according to requirements, which is not a limitation of the present disclosure. The driving path planning system 100 is connected with the control device 200 and transmits the planned driving path to the control device 200, so that each automatic harvester 1 follows the driving path planned by the driving path planning system 100. It is worth mentioning that, the connection mode between the driving path planning system 100 and the control device 200 may adopt a wired or wireless connection mode according to actual settings, which is not a limitation of the present disclosure. In addition, the first driving device 300, the second driving device 400, and the actuation device 500 are each connected with the control device 200. It is understandable that, the control device 200 can be a central control system of the automatic harvester 1, which integrates and controls of various devices of the automatic harvester 1. The first driving device 300 is connected with the actuation device 500, the second driving device 400, and the control device 200, and provides power for the actuation device 500, the second driving device 400, and the control device 200. The first driving device 300 is controlled by the control device 200 to drive various components to perform corresponding operations. It is worth mentioning that, the first driving device 300 can be implemented as a fuel, electric, or hybrid drive, which is not a limitation of the present disclosure. The second driving device 400 is used to drive the automatic harvester 1 to move, such as crawler moving, two-wheel moving, or four-wheel moving. The actuation device 500 is used to perform harvesting operations, such as cutting. The driving path planning system 100 is used to provide driving paths of the multiple automatic harvesters 1.

In addition, a method for planning driving paths of multiple automatic harvesters provided by the present disclosure is described. The method for planning driving paths of multiple automatic harvesters includes the following steps:
(a) a detection device 10 detects and forms basic farmland information; and
(b) after the basic farmland information is received and quantity determining information is determined, a path planning module 20 divides a harvesting area of multiple automatic harvesters 1 and the driving path of each of the multiple automatic harvester 1.

In step (a), the basic farmland information includes information such as a size, an area, a shape, coordinates, and a crop category of the farmland.

In step (a), the basic farmland information is acquired by an automatic detection module 11 through a fixed-point detection or a movement detection. In particular, the automatic detection module 11 may be combined with the automatic harvesters, an unmanned aerial vehicle, or a wireless detector to acquire the basic farmland information. In addition, the automatic detection module 11 may be implemented as an infrared sensor, a laser sensor, an ultrasonic sensor, an image sensor, or a GPS satellite positioning module.

In step (a), the basic farmland information is manually input through a manual determining module 12.

In step (a), an obstacle pre-detecting device 13 is used to detect whether there is at least one obstacle, and generate previous obstacle information. In particular, the obstacle pre-detecting device 13 detects together with the automatic detection module 11. Further, in step (a), in addition to generating the basic farmland information, if there is at least one obstacle, the previous obstacle information can also be generated at the same time. Both the basic farmland information and the obstacle information are transmitted to a control module 22 of the path planning module 20, and the control module 22 of the path planning module 20 performs analysis and path planning.

In step (b), the driving path of each automatic harvester 1 has an initial driving point, each initial driving point may be the same or different. In other words, the multiple automatic harvesters 1 may all start harvesting from a same place or different places. It is worth mentioning that, the initial travel point is a starting point of the driving path of each automatic harvester 1.

In step (b), the quantity of harvesting areas is equal to the quantity of automatic harvesters 1. For example, assuming that there are four automatic harvesters 1, the quantity of harvesting areas is four.

In step (b), a quantity determining module 21 is used to determine the quantity of the automatic harvesters 1.

In step (b), the total of each of the harvesting areas is equal to the total farmland area.

In step (b), the driving paths of the automatic harvesters 1 are not to be disturbed by each other.

## Claims

1. A method for planning driving paths of multiple automatic harvesters (1), each harvester comprising a detection device, the method comprising:
detecting and forming basic farmland information by a detection device (10); and
dividing a harvesting area and forming a driving path for each of the multiple automatic harvesters (1) after the basic farmland information is received and quantity determining information is determined;
**characterized in that** the detection device (10) comprises at least one driving obstacle detector (14); the at least one driving obstacle detector (14) comprises at least one probe (142) arranged in front of the automatic harvester (1); and the method further comprises:
acquiring detection information of at least one obstacle by using the at least one probe (142) in response that the at least one obstacle is detected when the automatic harvester (1) is driving based on the driving path, the detection information comprising a size of the at least one obstacle; and
determining whether the automatic harvester (1) stops operating according to the detection information;
wherein the driving path of each automatic harvester (1) has an initial driving point, the initial travel point is a starting point of the driving path of each automatic harvester (1), the initial travel point of each automatic harvester (1) is the same, and each automatic harvester (1) returns to the initial driving point after harvesting.

2. The method according to claim 1, further comprising:
transmitting the driving path for each of the multiple automatic harvesters (1) to a control device (200) of each of the multiple automatic harvesters (1).

3. The method according to claim 1, wherein the basic farmland information is an information group formed by a size, an area, a shape, coordinates, and a crop category of a farmland.

4. The method according to claim 1, wherein detecting and forming basic farmland information by a detection device (10) comprises:
acquiring the basic farmland information by an automatic detection module (11) through a fixed-point detection or a movement detection.

5. The method according to claim 4, wherein the automatic detection module (11) is a module formed by an infrared sensor, a laser sensor, an ultrasonic sensor, an image sensor, or a GPS satellite positioning module.

6. The method according to claim 1, wherein dividing a harvesting area and forming a driving path for each of the multiple automatic harvesters (1) further comprising:
detecting whether there is at least one obstacle; and
generating previous obstacle information.

7. The method according to claim 1, wherein dividing a harvesting area and forming a driving path for each of the multiple automatic harvesters (1) further comprising:
determining a quantity of the multiple automatic harvesters (1).

8. The method according to claim 1, wherein the driving paths of the multiple automatic harvesters (1) are not to be affected by each other.

9. The method according to claim 1, wherein dividing a harvesting area and forming a driving path for each of the multiple automatic harvesters (1) further comprising:
determining a driving mode of each automatic harvester (1) in response to user input and generating driving information, the driving mode being selected from one of a plurality of modes, and the plurality of modes comprising a multiple circles pattern, a zigzag pattern, a shortest path, and an optimal path, loop inward from periphery.

10. The method according to claim 1, further comprising:
replanning the driving path for the automatic harvesting in the harvesting area that has detected the at least one obstacle and obtaining a replanned driving path, the driving paths of other automatic harvestings in the harvesting areas are not affected, and the replanned driving path prevents the multiple automatic harvesters (1) from colliding with each other.

11. A system for planning driving paths of multiple automatic harvesters (1), each harvester comprising a detection device (10), the system comprising:
at least one of the detection devices (10) is configured to acquire basic farmland information; and
a path planning module (20) comprising a quantity determining module (21) and a control module (22), wherein the quantity determining module (21) is connected with the control module (22) and is configured to transmit quantity determining information to the control module (22),
wherein the control module (22) is configured to divide a harvesting area and to form a driving path for each of the multiple automatic harvesters (1) according to the basic farmland information and the quantity determining information;
**characterized in that** the detection device (10) comprises at least one driving obstacle detector (14) connected with the control module (22); the at least one driving obstacle detector (14) comprising at least one probe (142) arranged in front of the automatic harvester (1); the at least one probe (142) acquiring detection information of at least one obstacle in response that the at least one obstacle is detected when the automatic harvester (1) is driving based on the driving path, and configured to transmit the detection information to the control module (22), the detection information comprising a size of the at least one obstacle; and the control module (22) is configured to determine whether the automatic harvester (1) stops operating according to the detection information;
wherein the driving path of each automatic harvester (1) has an initial driving point, the initial travel point is a starting point of the driving path of each automatic harvester (1), the initial travel point of each automatic harvester (1) is the same, and each automatic harvester (1) is configured to return to the initial driving point after harvesting.

12. The system according to claim 11, wherein the basic farmland information is an information group formed by a size, an area, a shape, coordinates, and a crop category of a farmland.

13. The system according to claim 11, wherein the detection device (10) comprises:
an automatic detection module (11) connected with the control module (22), wherein the automatic detection module (11) is configured to acquire the basic farmland information through a fixed-point detection or a movement detection, and transmits the basic farmland information to the control module (22).

14. The system according to claim 13, wherein the automatic detection module (11) is arranged on the automatic harvesters (1), an unmanned aerial vehicle, or a wireless detector, to perform movement detection.

15. The system according to claim 13, wherein the automatic detection module (11) is a module formed by an infrared sensor, a laser sensor, an ultrasonic sensor, an image sensor, or a GPS satellite positioning module.

16. The system according to claim 11, wherein the detection device (10) further comprises:
at least one manual determining module connected with the control module (22) and configured to input the basic farmland information into the control module (22).

17. The system according to claim 11, wherein the detection device (10) further comprises:
at least one obstacle pre-detecting device (13) connected with the control module (22) for acquiring previous obstacle information through a fixed-point detection or a movement detection, and transmitting the previous obstacle information to the control module (22).

18. The system according to claim 11,
wherein the control module (22) is configured to replan the driving path for the automatic harvesting in the harvesting area that has detected the at least one obstacle and obtains a replanned driving path, the driving paths of other automatic harvestings in the harvesting areas are not affected, and the replanned driving path prevents the multiple automatic harvesters (1) from colliding with each other.

19. The system according to claim 11, wherein the at least one driving obstacle detector (14) comprises a driving camera sensor (141), which comprises a plurality of cameras (1411) surrounding the automatic harvester (1) for acquiring images around the automatic harvester (1).

20. The system according to claim 11, wherein the path determining module (23) is configured to determine a driving mode of each automatic harvester (1) in response to user input, the driving mode is selected from one of a plurality of modes, the plurality of modes comprise a multiple circles pattern, a zigzag pattern, a shortest path, and an optimal path, loop inward from periphery.

21. The system according to claim 11, wherein the at least one driving obstacle detector (14) comprises at least one infrared detector (143), which is arranged in front of the automatic harvester (1) for sensing people or animals who suddenly enter the front of the automatic harvester (1).

22. The system according to claim 11, wherein the system is arranged on at least one of the multiple automatic harvesters (1), a remote control, a smart phone, a radio remote control, or a smart tablet host device.

## Patentansprüche

1. Verfahren zur Planung von Fahrwegen mehrerer automatisierter Erntemaschinen (1), wobei jede Erntemaschine eine Erfassungsvorrichtung umfasst, wobei das Verfahren umfasst:
Erfassen und Bilden von grundlegenden Ackerlandinformationen durch eine Erfassungsvorrichtung (10); und Aufteilen eines Erntegebiets und Bilden eines Fahrwegs für jede von den mehreren automatischen Erntemaschinen (1), nachdem die grundlegenden Ackerlandinformationen empfangen und die Mengenbestimmungsinformationen bestimmt wurden;
**dadurch gekennzeichnet, dass** die Erfassungsvorrichtung (10) mindestens einen Fahrhindernisdetektor (14) umfasst; der mindestens eine Fahrhindernisdetektor (14) mindestens eine Sonde (142) umfasst, die vor der automatischen Erntemaschine (1) angeordnet ist; und das Verfahren ferner umfasst:
Erfassen von Erfassungsinformationen zu mindestens einem Hindernis durch Verwendung der mindestens eine Sonde (142) als Reaktion darauf, dass das mindestens ein Hindernis erfasst wird, wenn die automatische Erntemaschine (1) basierend auf dem Fahrweg fährt, wobei die Erfassungsinformationen eine Größe des mindestens eines Hindernisses umfassen; und
Bestimmen, ob die automatische Erntemaschine (1) den Betrieb einstellt, entsprechend den Erkennungsinformationen;
wobei die Fahrstrecke jedes automatischen Erntegeräts (1) einen anfänglichen Fahrpunkt hat, der anfängliche Fahrpunkt ein Startpunkt der Fahrstrecke jedes automatischen Erntegeräts (1) ist, der anfängliche Fahrpunkt jedes automatischen Erntegeräts (1) derselbe ist und jedes automatische Erntegerät (1) nach der Ernte zu dem anfänglichen Fahrpunkt zurückkehrt.

2. Verfahren nach Anspruch 1, weiterhin umfassend:
Übertragen der Fahrstrecke für jeden der mehreren automatischen Erntemaschinen (1) an eine Steuervorrichtung (200) jedes von den mehreren automatischen Erntemaschinen (1).

3. Verfahren nach Anspruch 1, wobei die grundlegenden Ackerlandinformationen eine Informationsgruppe sind, die aus einer Größe, einer Fläche, einer Form, Koordinaten und einer Erntekategorie eines Ackerlandes besteht.

4. Verfahren nach Anspruch 1, wobei das Erfassen und Bilden von grundlegenden Ackerlandinformationen durch eine Erfassungsvorrichtung (10) umfasst:
Erfassung der Grundinformationen über die Anbaufläche durch ein automatisches Detektionsmodul (11) mittels einer Fixpunktdetektion oder einer Bewegungsdetektion.

5. Verfahren nach Anspruch 4, wobei das automatische Erkennungsmodul (11) ein Modul ist, das durch einen Infrarotsensor, einen Lasersensor, einen Ultraschallsensor, einen Bildsensor oder ein GPS-Satellitenpositionierungsmodul gebildet wird.

6. Verfahren nach Anspruch 1, wobei das Aufteilen eines Erntebereichs und das Bilden eines Fahrwegs für jeden der mehreren automatischen Erntemaschinen (1) ferner umfasst:
Erkennen, ob mindestens ein Hindernis vorhanden ist; und
Generieren von Informationen zu vorherigen Hindernissen.

7. Verfahren nach Anspruch 1, wobei das Aufteilen eines Erntebereichs und das Bilden eines Fahrwegs für jeden der mehreren automatischen Erntemaschinen (1) ferner umfasst:
Bestimmen einer Anzahl der mehreren automatischen Erntemaschinen (1).

8. Verfahren nach Anspruch 1, wobei die Fahrwege der mehreren automatischen Erntemaschinen (1) nicht durcheinander beeinflusst werden dürfen.

9. Verfahren nach Anspruch 1, wobei das Aufteilen eines Erntebereichs und das Bilden eines Fahrwegs für jeden der mehreren automatischen Erntemaschinen (1) ferner umfasst:
Bestimmen eines Fahrmodus jeder automatischen Erntemaschine (1) als Reaktion auf eine Benutzereingabe und Erzeugen von Fahrinformationen, wobei der Fahrmodus aus einer Vielzahl von Modi ausgewählt wird und die Vielzahl von Modi ein Muster mit mehreren Kreisen, ein Zickzackmuster, einen kürzesten Weg und einen optimalen Weg umfasst, die von der Peripherie nach innen verlaufen.

10. Verfahren nach Anspruch 1, weiterhin umfassend:
Neuplanen der Fahrspur für die automatische Ernte in dem Erntegebiet, in dem das mindestens ein Hindernis erkannt wurde, und Erhalten einer neu geplanten Fahrspur, wobei die Fahrspuren anderer automatischer Ernten in den Erntegebieten nicht beeinträchtigt werden und die neu geplante Fahrspur verhindert, dass die mehreren automatischen Erntemaschinen (1) miteinander kollidieren.

11. System zur Planung von Fahrwegen mehrerer automatischer Erntemaschinen (1), wobei jede Erntemaschine eine Erfassungsvorrichtung (10) umfasst, wobei das System umfasst:
mindestens eines der Erfassungsgeräte (10) ist so konfiguriert, dass es grundlegende Informationen über Ackerland erfasst; und
ein Pfadplanungsmodul (20), dass ein Mengenbestimmungsmodul (21) und ein Steuermodul (22) umfasst, wobei das Mengenbestimmungsmodul (21) mit dem Steuermodul (22) verbunden ist und dazu konfiguriert ist, Mengenbestimmungsinformationen an das Steuermodul (22) zu übertragen,
wobei das Steuermodul (22) dazu konfiguriert ist, eine Erntefläche aufzuteilen und einen Fahrweg für jede von den mehreren automatischen Erntemaschinen (1) entsprechend den grundlegenden Ackerlandinformationen und den mengenbestimmenden Informationen zu bilden;
**dadurch gekennzeichnet, dass** die Erfassungsvorrichtung (10) mindestens einen Fahrhindernisdetektor (14) umfasst, der mit dem Steuermodul (22) verbunden ist;
wobei der mindestens eine Fahrhindernisdetektor (14) mindestens eine vor der automatischen Erntemaschine (1) angeordnete Sonde (142) umfasst;
wobei die mindestens eine Sonde (142) Erfassungsinformationen zu mindestens einem Hindernis als Reaktion darauf erfasst, dass das mindestens ein Hindernis erkannt wird, wenn die automatische Erntemaschine (1) basierend auf dem Fahrweg fährt, und dazu konfiguriert ist, die Erfassungsinformationen an das Steuermodul (22) zu übertragen;
wobei die Erkennungsinformationen eine Größe des mindestens eines Hindernisses umfassen; und das Steuermodul (22) dazu konfiguriert ist, zu bestimmen, ob die automatische Erntemaschine (1) den Betrieb entsprechend den Erkennungsinformationen einstellt;
wobei die Fahrstrecke jedes automatischen Erntegeräts (1) einen anfänglichen Fahrpunkt hat, der anfängliche Fahrpunkt ein Startpunkt der Fahrstrecke jedes automatischen Erntegeräts (1) ist, der anfängliche Fahrpunkt jedes automatischen Erntegeräts (1) derselbe ist und jedes automatische Erntegerät (1) so konfiguriert ist, dass es nach der Ernte zu dem anfänglichen Fahrpunkt zurückkehrt.

12. Das System nach Anspruch 11, wobei die grundlegenden Ackerlandinformationen eine Informationsgruppe sind, die aus einer Größe, einer Fläche, einer Form, Koordinaten und einer Erntekategorie eines Ackerlandes besteht.

13. System nach Anspruch 11 mit der Detektionsvorrichtung (10) umfasst:
ein automatisches Erkennungsmodul (11), das mit dem Steuermodul (22) verbunden ist, wobei das automatische Erkennungsmodul (11) dazu konfiguriert ist, die grundlegenden Ackerlandinformationen durch eine Festpunkterkennung oder eine Bewegungserkennung zu erfassen und die grundlegenden Ackerlandinformationen an das Steuermodul (22) zu übertragen.

14. System nach Anspruch 13, wobei das automatische Erkennungsmodul (11) an den automatischen Erntemaschinen (1), einem unbemannten Luftfahrzeug oder einem drahtlosen Detektor angeordnet ist, um eine Bewegungserkennung durchzuführen.

15. System nach Anspruch 13, wobei das automatische Erkennungsmodul (11) ein Modul ist, das aus einem Infrarotsensor, einem Lasersensor, einem Ultraschallsensor, einem Bildsensor oder einem GPS-Satellitenpositionierungsmodul besteht.

16. System nach Anspruch 11 mit der Detektionsvorrichtung (10) weiterhin umfasst:
mindestens ein manuelles Bestimmungsmodul, das mit dem Steuermodul (22) verbunden und so konfiguriert ist, dass es die grundlegenden Ackerlandinformationen in das Steuermodul (22) eingibt.

17. System nach Anspruch 11 mit der Detektionsvorrichtung (10) weiterhin umfasst:
mindestens eine mit dem Steuermodul (22) verbundene Hindernisvorerkennungseinrichtung (13) zum Erfassen von Hindernisvorinformationen durch eine Festpunkterkennung oder eine Bewegungserkennung und zum Übertragen der Hindernisvorinformationen an das Steuermodul (22).

18. System nach Anspruch 11,
wobei das Steuermodul (22) so konfiguriert ist, dass es die Fahrstrecke für die automatische Ernte in dem Erntegebiet, das das mindestens ein Hindernis erkannt hat, neu plant und eine neu geplante Fahrstrecke erhält, wobei die Fahrstrecken anderer automatischer Ernten in den Erntegebieten nicht beeinträchtigt werden und die neu geplante Fahrstrecke verhindert, dass die mehreren automatischen Erntemaschinen (1) miteinander kollidieren.

19. System nach Anspruch 11, wobei der mindestens eine Fahrhindernisdetektor (14) einen Fahrkamerasensor (141) umfasst, der eine Vielzahl von Kameras (1411) umfasst, die die automatische Erntemaschine (1) umgeben, um Bilder rund um die automatische Erntemaschine (1) aufzunehmen.

20. System nach Anspruch 11, wobei das Pfadbestimmungsmodul (23) so konfiguriert ist, dass es einen Fahrmodus jedes automatischen Erntegeräts (1) als Reaktion auf eine Benutzereingabe bestimmt, wobei der Fahrmodus aus einer Vielzahl von Modi ausgewählt wird, wobei die Vielzahl von Modi ein Muster mit mehreren Kreisen, ein Zickzackmuster, einen kürzesten Pfad und einen optimalen Pfad umfasst, wobei die Schleife von der Peripherie nach innen verläuft.

21. System nach Anspruch 11, wobei der mindestens eine Fahrhindernisdetektor (14) mindestens einen Infrarotdetektor (143) umfasst, der vor der automatischen Erntemaschine (1) angeordnet ist, um Personen oder Tiere zu erfassen, die plötzlich vor die automatische Erntemaschine (1) treten.

22. System nach Anspruch 11, wobei das System auf mindestens einer von den mehreren automatischen Erntemaschinen (1), einer Fernbedienung, einem Smartphone, einer Funkfernbedienung oder einem Smart-Tablet-Hostgerät angeordnet ist.

## Revendications

1. Un procédé de planification des trajets de conduite de plusieurs moissonneuses automatiques (1), chaque moissonneuse comprenant un dispositif de détection, la méthode comprenant :
la détection et la formation d'informations de base sur les terres agricoles par un dispositif de détection (10) ; et la division d'une zone de récolte et la formation d'un trajet de conduite pour chacune des multiples moissonneuses automatiques (1) après la réception des informations de base sur les terres agricoles et la détermination des informations de détermination de la quantité ;
**caractérisé en ce que** le dispositif de détection (10) comprend au moins un détecteur d'obstacle à la conduite (14) ; au moins un détecteur d'obstacle à la conduite (14) qui comprend au moins une sonde (142) disposée à l'avant de la moissonneuse automatique (1) ; et la méthode comprend en outre :
l'acquisition des informations de détection d'au moins un obstacle en utilisant au moins une sonde (142) en réponse à la détection d'au moins un obstacle lorsque la moissonneuse automatique (1) roule sur la base du trajet de conduite, les informations de détection comprenant une taille d'au moins un obstacle ; et
la confirmation si la moissonneuse automatique (1) s'arrête de fonctionner en fonction des informations de détection ;
dans lequel le trajet de conduite de chaque moissonneuse automatique (1) a un point de conduite initial, le point de déplacement initial est un point de départ du trajet de conduite de chaque moissonneuse automatique (1), le point de déplacement initial de chaque moissonneuse automatique (1) est le même, et chaque moissonneuse automatique (1) retourne au point de conduite initial après la récolte.

2. Le procédé selon la revendication 1, comprenant en outre :
la transmission du trajet de conduite pour chacune des multiples moissonneuses automatiques (1) à un dispositif de commande (200) de chacune des multiples moissonneuses automatiques (1).

3. Procédé selon la revendication 1, dans lequel les informations de base sur les terres agricoles sont un groupe d'informations formé par une taille, une superficie, une forme, des coordonnées et une catégorie de culture d'une terre agricole.

4. Procédé selon la revendication 1, dans lequel la détection et la formation d'informations de base sur les terres agricoles par un dispositif de détection (10) comprennent :
l'acquisition des informations de base du terrain agricole par un module de détection automatique (11) par le biais d'une détection à point fixe ou d'une détection de mouvement.

5. Le procédé selon la revendication 4, dans lequel le module de détection automatique (11) est un module formé par un capteur infrarouge, un capteur laser, un capteur à ultrasons, un capteur d'image ou un module de positionnement par satellite GPS.

6. Procédé selon la revendication 1, dans lequel la division d'une zone de récolte et la formation d'un trajet de conduite pour chacune des multiples moissonneuses automatiques (1) comprennent en outre :
la détection d'au moins un obstacle ; et
la génération des informations sur les obstacles précédents.

7. Procédé selon la revendication 1, dans lequel la division d'une zone de récolte et la formation d'un chemin de conduite pour chacune des multiples moissonneuses automatiques (1) comprennent en outre :
la détermination d'une quantité de plusieurs moissonneuses automatiques (1).

8. Procédé selon la revendication 1, dans lequel les trajets de conduite des multiples moissonneuses automatiques (1) ne doivent pas être affectées les unes par les autres.

9. Procédé selon la revendication 1, dans lequel la division d'une zone de récolte et la formation d'un trajet de conduite pour chacune des multiples moissonneuses automatiques (1) comprennent en outre :
la détermination d'un mode de conduite de chaque moissonneuse automatique (1) en réponse à une entrée d'utilisateur et la génération des informations de conduite, le mode de conduite étant sélectionné parmi une pluralité de modes, et la pluralité de modes comprenant un motif à cercles multiples, un motif en zigzag, un trajet le plus court et un trajet optimal, en boucle vers l'intérieur depuis la périphérie.

10. Le procédé selon la revendication 1, comprenant en outre :
la replanification du trajet de conduite pour la récolte automatique dans la zone de récolte qui a détecté au moins un obstacle et en obtenant un trajet de conduite replanifié, les trajets de conduite d'autres récoltes automatiques dans les zones de récolte ne sont pas affectés, et le trajet de conduite replanifié empêche les multiples moissonneuses automatiques (1) d'entrer en collision les unes avec les autres.

11. Un système de planification des trajets de conduite de plusieurs moissonneuses automatiques (1), chaque moissonneuse comprenant un dispositif de détection (10), le procédé comprenant :
au moins un des dispositifs de détection (10) qui est configuré pour acquérir des informations de base sur les terres agricoles ; et
un module de planification de trajet (20) comprenant un module de détermination de quantité (21) et un module de commande (22), le module de détermination de quantité (21) étant connecté au module de commande (22) et étant configuré pour transmettre des informations de détermination de quantité au module de commande (22),
dans lequel le module de commande (22) est configuré pour diviser une zone de récolte et pour former un chemin de conduite pour
chacune des multiples moissonneuses automatiques (1) en fonction des informations de base sur les terres agricoles et des informations relatives à la détermination de la quantité ;
**caractérisé par le fait que** le dispositif de détection (10) comprend au moins un détecteur d'obstacle à la conduite (14) connecté au module de commande (22) ;
le ou les détecteurs d'obstacles de conduite (14) comprenant au moins une sonde (142) disposée devant la moissonneuse automatique (1) ;
la ou les sondes (142) acquérant des informations de détection d'au moins un obstacle en réponse au fait que le ou les obstacles sont détectés lorsque la moissonneuse automatique (1) se déplace sur la base du trajet de conduite, et configurée pour transmettre les informations de détection au module de commande (22),
les informations de détection comprenant une taille du ou des obstacles ; et le module de commande (22) est configuré pour déterminer si la moissonneuse automatique (1) cesse de fonctionner en fonction des informations de détection ;
dans lequel le trajet de conduite de chaque moissonneuse automatique (1) a un point de conduite initial, le point de déplacement initial est un point de départ du trajet de conduite de chaque moissonneuse automatique (1), le point de déplacement initial de chaque moissonneuse automatique (1) est le même, et chaque moissonneuse automatique (1) est configuré pour retourner au point de conduite initial après la récolte.

12. Système selon la revendication 11, dans lequel les informations de base sur les terres agricoles sont un groupe d'informations formé par une taille, une superficie, une forme, des coordonnées et une catégorie de culture d'une terre agricole.

13. Système selon la revendication 11, dans lequel le dispositif de détection (10) comprend :
un module de détection automatique (11) connecté au module de commande (22), le module de détection automatique (11) étant configuré pour acquérir les informations de base sur les terres agricoles par le biais d'une détection à point fixe ou d'une détection de mouvement, et transmet les informations de base sur les terres agricoles au module de commande (22).

14. Système selon la revendication 13, dans lequel le module de détection automatique (11) est disposé sur les moissonneuses automatiques (1), un véhicule aérien sans pilote ou un détecteur sans fil, pour effectuer une détection de mouvement.

15. Le système selon la revendication 13, dans lequel le module de détection automatique (11) est un module formé par un capteur infrarouge, un capteur laser, un capteur à ultrasons, un capteur d'image ou un module de positionnement par satellite GPS.

16. Système selon la revendication 11, dans lequel le dispositif de détection (10) comprend en outre :
au moins un module de détermination manuel connecté au module de commande (22) et configuré pour entrer les informations de base sur les terres agricoles dans le module de commande (22).

17. Système selon la revendication 11, dans lequel le dispositif de détection (10) comprend en outre :
au moins un dispositif de pré-détection d'obstacle (13) connecté au module de commande (22) pour acquérir des informations d'obstacle précédentes par le biais d'une détection de point fixe ou d'une détection de mouvement, et transmettre les informations d'obstacle précédentes au module de commande (22).

18. Système selon la revendication 11,
dans lequel le module de commande (22) est configuré pour replanifier le trajet de conduite pour la récolte automatique dans
la zone de récolte qui a détecté au moins un obstacle et en obtenant un trajet de conduite replanifié, les trajets de conduite d'autres récoltes automatiques dans les zones de récolte ne sont pas affectés, et le trajet de conduite replanifié empêche les multiples moissonneuses automatiques (1) d'entrer en collision les unes avec les autres.

19. Système selon la revendication 11, dans lequel le ou les détecteurs d'obstacles de conduite (14) comprennent un capteur de caméra de conduite (141), qui comprend une pluralité de caméras (1411) entourant la moissonneuse automatique (1) pour acquérir des images autour de la moissonneuse automatique (1).

20. Système selon la revendication 11, dans lequel le module de détermination de trajet (23) est configuré pour déterminer un mode de conduite de chaque moissonneuse automatique (1) en réponse à une entrée d'utilisateur, le mode de conduite est sélectionné parmi une pluralité de modes, la pluralité de modes comprenant un motif à cercles multiples, un motif en zigzag, un chemin le plus court et un chemin optimal, en boucle vers l'intérieur depuis la périphérie.

21. Système selon la revendication 11, dans lequel le ou les détecteurs d'obstacles de conduite (14) comprennent au moins un détecteur infrarouge (143), qui est disposé devant la moissonneuse automatique (1) pour détecter des personnes ou des animaux qui pénètrent soudainement à l'avant de la moissonneuse automatique (1).

22. Système selon la revendication 11, dans lequel le système est disposé sur au moins l'une des multiples moissonneuses automatiques (1), une télécommande, un téléphone intelligent, une télécommande radio ou un dispositif hôte de tablette intelligente.
